# EUROPÄISCHE PATENTSCHRIFT

(11) **EP 2 066 479 B1**
(45) Veröffentlichungstag und Bekanntmachung des Hinweises auf die Patenterteilung: **09.11.2016**
(21) Anmeldenummer: 07786619.2
(22) Anmeldetag: 08.08.2007
(51) Int. Cl.: B26B 19/38, H02J 7/00

(54) **ELEKTROKLEINGERÄT MIT LADEZUSTANDSANZEIGE**
SMALL ELECTRICAL DEVICE WITH CHARGING STATE INDICATOR
PETIT APPAREIL ÉLECTROMÉNAGER À AFFICHAGE DE L'ÉTAT DE CHARGE

(30) Priorität: 14.08.2006 DE 102006038127
(43) Veröffentlichungstag der Anmeldung: 10.06.2009
(73) Patentinhaber: Braun GmbH, 61476 Kronberg/Taunus (DE)
(72) Erfinder: VETTER, Ingo, 61184 Karben (DE)
(74) Vertreter: Zetterer, Gerd
(86) Internationale Anmeldenummer: PCT/EP2007/007002
(87) Internationale Veröffentlichungsnummer: WO 2008/019789

(56) Entgegenhaltungen:
- EP-A- 0 425 044
- EP-A- 0 674 979
- WO-A-97/22172
- WO-A-98/25736
- WO-A-2004/073941
- US-A- 5 274 735
- US-A1- 2006 059 696
- US-B1- 6 276 975

## Beschreibung

Die Erfindung betrifft ein batteriebetriebenes Elektrokleingerät mit einer Ladezustandsanzeige, vorzugsweise ein elektrisches Haarschneidegerät oder eine elektrische Zahnbürste, die von einem oszillierenden Elektromotor oder Linearmotor angetrieben wird.

Aus der EP 0 712 007 B1 ist ein batteriebetriebener Rasierapparat mit einer Ladezustandsanzeige und einer Einrichtung bekannt, die einen Ladezustand detektiert, bei dem die Batterie so weit entladen ist, daß der Rasierapparat nur noch für eine sehr kurze Zeit betrieben werden kann. Wenn dieser Ladezustand erreicht ist, wird der Gleichstrommotor des Rasierapparats von einem Pulsbreitenmodulator mit einer pulsierenden Spannung mit konstanter Frequenz versorgt, deren Tastverhältnis allmählich bis auf Null reduziert wird, sodaß sich auch die Motordrehzahl entsprechend reduziert. Auf diese Weise wird ein Benutzer darauf hingewiesen, daß der Motor und damit auch das vom Motor angetriebene Schneidwerkzeug demnächst stehenbleiben wird, sodaß der Benutzer intuitiv das Rasieren beenden wird, bevor Barthaare durch das stehengebliebene Schneidwerkzeug eingeklemmt werden können.

Es sind auch batteriebetriebene Rasierapparate und elektrische Zahnbürsten bekannt, die von einem oszillierenden Elektromotor oder Linearmotor angetrieben werden. Diese Motore besitzen eine Resonanzfrequenz, mit der sie betrieben werden müssen, um einen guten Wirkungsgrad zu erzielen. Nimmt die Batteriespannung mit zunehmender Entladung der Batterie ab, laufen diese Motore bei verringerter Amplitude mit ihrer Resonanzfrequenz weiter. Somit kann ein Benutzer am Motorgeräusch nicht erkennen, daß der Motor demnächst wegen entladener Batterie einfach stehenbleiben wird. Dieses plötzliche Stehenbleiben kann der Benutzer als Defekt mißdeuten, und bei einem Rasierapparat zum schmerzhaften Einklemmen von Barthaaren führen. Daher versuchte man bisher, den Benutzer durch ein Piepen und Blinken einer entsprechenden Anzeige auf die leere Batterie und das drohende Stehenbleiben des Motors rechtzeitig hinzuweisen.

Der Erfindung liegt die Aufgabe zugrunde, ein batteriebetriebenes Elektrokleingerät anzugeben, das von einem oszillierenden Elektromotor oder Linearmotor antreibbar ist, und das eine Ladezustandsanzeige aufweist, die vom Benutzer besser erkannt werden kann.

Die Lösung dieser Aufgabe gelingt mit einem Elektrokleingerät, das eine Primärbatterie oder eine Sekundärbatterie und eine Schaltung zum Bestimmen des Ladezustands der Batterie enthält, und das von einem oszillierenden Elektromotor oder Linearmotor angetrieben wird, der von einer elektronischen Schaltung mittels eines pulsbreitenmodulierten Steuersignals angesteuert wird, wobei die Steuerschaltung bei Erreichen oder Unterschreiten eines bestimmten Ladezustands der Batterie ein sich änderndes Motorgeräusch bewirkt. Vorzugsweise wird dann, wenn im Betrieb der Ladezustand der Batterie unter einen Schwellwert abgefallen ist, der oszillierende Elektromotor oder Linearmotor von der Steuerschaltung so angesteuert, daß sich dessen Motorgeräusch so ändert, wie das bei einem Gleichstrommotor in gleicher Situation der Fall wäre. Die Änderung des Motorgeräuschs stellt somit eine akustische Ladezustandsanzeige dar, die der Benutzer von anderen batteriebetriebenen Elektrogeräten her gewohnt ist, und daher intuitiv richtig als fast leere Batterie interpretieren wird.

Die Steuerschaltung für den oszillierenden Elektromotor oder Linearmotor ist in an sich bekannter Weise ausgebildet, ist jedoch mit einer Schaltung zum Bestimmen des Ladezustands der Batterie verbunden, die bei Erreichen oder Unterschreiten eines bestimmten Ladezustands der Batterie ein entsprechendes Warnsignal an die Steuerschaltung abgibt. Üblicherweise liefert die Steuerschaltung ein pulsweitenmoduliertes Steuersignal, dessen Frequenz auf die mechanische Resonanzfrequenz des oszillierenden Elektromotors oder Linearmotors abgestimmt ist, und das so geregelt wird, daß der oszillierende Elektromotor oder Linearmotor in Resonanz bleibt. Um das Motorgeräusch des oszillierenden Elektromotors oder Linearmotors zu ändern, muß jedoch von der Regel abgewichen werden, derzufolge der oszillierende Elektromotor oder Linearmotor stets mit seiner Resonanzfrequenz zu betreiben ist, um einen optimalen Wirkungsgrad zu erzielen. Die Steuerschaltung ist so ausgebildet, daß sie aufgrund des von der Schaltung zum Bestimmen des Ladezustands abgegebenen Warnsignals mit der Regelung des Steuersignals aufhört, und stattdessen den oszillierenden Elektromotor oder Linearmotor mit einer anderen als der Resonanzfrequenz ansteuert, sodaß dieser mit der durch das Steuersignal vorgegebenen Frequenz schwingt, allerdings bei einem stark erhöhten Stromverbrauch. Hierbei ist zu erwähnen, daß - abhängig vom Resonanzverhalten des Motors - der Linearmotor bei Ansteuerung außerhalb des Resonanzbereichs praktisch keine Schwingungsamplitude mehr hat. Das geänderte Motorgeräusch ist dennoch zu hören, welches aber hauptsächlich auf die wirkenden elektromagnetischen Kräfte zurückzuführen ist. Eine langsame Drehzahländerung, wie sie für einen Gleichstrommotor in der EP 0 712 007 B1 beschrieben ist, ist bei einem oszillierenden Elektromotor oder Linearmotor, der nur in Resonanz betrieben werden kann, nicht möglich, da der oszillierende Elektromotor bzw. der Linearmotor außerhalb der Resonanzfrequenz einen derart schlechten Wirkungsgrad hat, daß er - bei erhöhtem Stromverbrauch - nicht mehr zu einer Schwingung mit nennenswerter Amplitude angeregt werden kann. Allein eine Änderung des Tastverhältnisses des pulsweitenmodulierten Signals würde bei einem oszillierenden Elektromotor bzw. Linearmotor nur dazu führen, dass sich die Schwingungsamplitude ändert, wobei der Motor aber weiterhin mit seiner Resonanzfrequenz schwingen würde, es also zu keiner Motorgeräuschänderung käme. Wegen des erhöhten Stromverbrauchs außerhalb des Resonanzbetriebs ist es vorteilhaft, zusätzlich zur Änderung der Frequenz auch noch das Tastverhältnis des pulsweitenmodulierten Signals zu reduzieren, um zu vermeiden, daß die Spannung der bereits fast leeren Batterie vollends zusammenbricht. Außerdem wird dadurch auch noch die Lautstärke des Motorgeräuschs schwächer, was vom Benutzer ebenfalls in gewohnter Weise als Anzeichen für ein demnächst zu erwartendes Stehenbleiben des Motors angesehen wird.

Der Ladezustand der Batterie kann in an sich bekannter Weise detektiert werden, beispielsweise durch Messung der Batteriespannung. Vorzugsweise wird ein Schwellwert für die Spannung der Batterie festgelegt, der einem Ladezustand entspricht, mit dem das Elektrokleingerät noch für einige wenige Minuten betrieben werden kann. Auf diese Weise ist sichergestellt, daß das Elektrokleingerät zumindest noch so lange betrieben werden kann, bis die Steuerschaltung ihre Steuersignale so weit verändert und damit auch das Motorgeräusch so weit in Frequenz und/oder Amplitude heruntergefahren hat, bis der oszillierende Elektromotor oder Linearmotor schließlich stehenbleibt. Vorzugsweise beträgt die Zeitspanne, während der die Steuerschaltung das Motorgeräusch ändert, etwa 5 bis 30 Sekunden, vorzugsweise 10 bis 20 Sekunden. Dadurch verbleibt dem Benutzer genügend Zeit, die Benutzung des Elektrokleingeräts rechtzeitig abzubrechen. Im Falle eines elektrischen Haarschneidegeräts oder Rasierapparats kann auf diese Weise verhindert werden, daß das stehengebliebene Schneidwerkzeug Haare eines Benutzers schmerzhaft einklemmt.

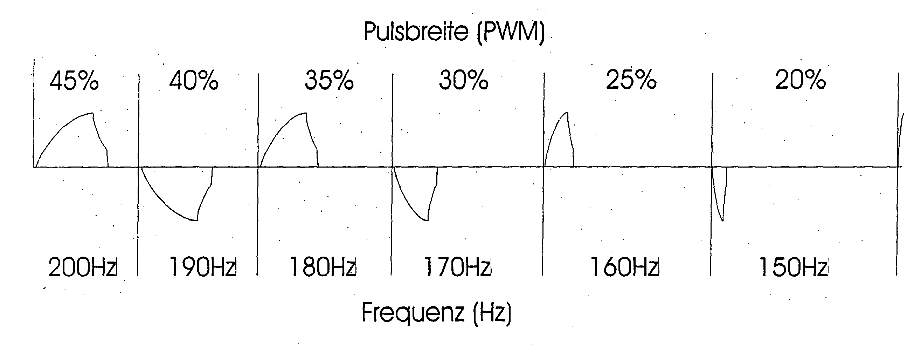

Die Erfindung wird nachfolgend anhand eines Ausführungsbeispiels erläutert, das in der einzigen Zeichnung veranschaulicht wird.

In der einzigen Figur ist schematisch ein pulsförmiges Steuersignal dargestellt, das von der elektronischen Steuereinrichtung des batteriebetriebenen Elektrokleingeräts erzeugt wird, nachdem die Schaltung zum Bestimmen des Ladezustands der Batterie festgestellt hat, daß ein Schwellwert für den Ladezustand der Batterie erreicht oder unterschritten ist. Dieses Steuersignal weist ein Pulsmuster auf, dessen Frequenz sich im Laufe der Zeit ausgehend von 200 Hz in Schritten von 10 Hz verringert. Gleichzeitig verringert sich auch dessen Pulsbreite ausgehend von 45% in Schritten von 5%. Natürlich kann die Änderung der Frequenz und/oder der Pulsbreite auch mit anderer Schrittweite oder kontinuierlich erfolgen. Vorzugsweise ist die Änderungsgeschwindigkeit bzw. Schrittweite so gewählt, daß es etwa 5 bis 30 Sekunden, vorzugsweise 10 bis 20 Sekunden dauert, bis die Frequenz und/oder Pulsbreite bis auf Null oder nahezu Null reduziert ist.

Die Figur veranschaulicht somit, daß nach dem Erkennen einer nahezu leeren Batterie ausgehend von einem Steuersignal, mit dem der oszillierende Elektromotor oder Linerarmotor in Resonanz betrieben wurde (Frequenz 200 Hz, Pulsbreite 45%), die Frequenz und das Tastverhältnis des Steuersignals fortlaufend reduziert werden. Diese Reduzierung wird so lange durchgeführt, bis der oszillierende Elektromotor oder Linearmotor stehen bleibt, d.h. erforderlichenfalls bis die Frequenz und/oder das Tastverhältnis des Steuersignals bei Null angelangt sind. Wie bereits beschrieben, führt die Verringerung der Frequenz des Steuersignals zu einem Betrieb des oszillierenden Elektromotors oder Linearmotors außerhalb des Resonanzbereichs, sodaß die Amplitude der Schwingung wegen des stark verschlechterten Wirkungsgrads schnell zusammenbricht, der Motor aber wegen der wirkenden elektromagnetischen Kräfte aber ein Geräusch von sich verringernder Frequenz erzeugt, wie es der Benutzer von einem Gleichstrommotor kennt, der an einer schwachen Batterie betrieben wird. Die gleichzeitige Verringerung der Pulsbreite führt allein zu einer Verringerung der Stromzufuhr des außerhalb des Resonanzbereichs betriebenen oszillierenden Elektromotors oder Linearmotors, nicht aber zu einer Änderung des Motorgeräuschs.

## Patentansprüche

1. Batteriebetriebenes Elektrokleingerät mit
o einem oszillierenden Elektromotor oder Linearmotor, der im Betrieb in einem Resonanzbereich betrieben wird,
o einer elektronischen Schaltung zum Ansteuern des oszillierenden Elektromotors oder Linearmotors im Resonanzbereich, die als Steuerschaltung bezeichnet wird und
o einer Schaltung zum Bestimmen und Anzeigen des Ladezustands der Batterie,
**dadurch gekennzeichnet,**
**dass** bei Erreichen oder Unterschreiten eines bestimmten Ladezustands der Batterie im Betrieb die Steuerschaltung dazu angepasst ist, den oszillierenden Elektromotor oder Linearmotor so anzusteuern, dass von der Regel abgewichen wird, derzufolge der oszillierende Elektromotor oder Linearmotor stets mit seiner Resonanzfrequenz zu betreiben ist und stattdessen den oszillierenden Elektromotor oder Linearmotor mit einer anderen Frequenz als der Resonanzfrequenz anzusteuern, um das Motorgeräusch des oszillierenden Elektromotors oder Linearmotors zu ändern.

2. Elektrokleingerät nach Anspruch 1,
**dadurch gekennzeichnet,**
**dass** bei Erreichen oder Unterschreiten des bestimmten Ladezustands der Batterie im Betrieb die Steuerschaltung dazu vorgesehen ist, den oszillierenden Elektromotor oder Linearmotor mit einem Steuersignal anzusteuern, dessen Frequenz abnimmt.

3. Elektrokleingerät nach Anspruch 2,
**dadurch gekennzeichnet,**
**dass** bei Erreichen oder Unterschreiten des bestimmten Ladezustands der Batterie im Betrieb die Steuerschaltung dazu vorgesehen ist, den oszillierenden Elektromotor oder Linearmotor mit einem Steuersignal anzusteuern, dessen Tastverhältnis abnimmt.

4. Elektrokleingerät nach einem der vorhergehenden Ansprüche,
**dadurch gekennzeichnet,**
**dass** der bestimmte Ladezustand der Batterie, ab dem die Steuerschaltung das Motorgeräusch ändert, so gewählt ist, dass die Batterie noch genügend Ladung gespeichert hat, um das Elektrokleingerät noch so lange zu betreiben, bis die Steuerschaltung das Steuersignal so weit geändert hat, dass der oszillierende Elektromotor oder Linearmotor schließlich stehen bleibt.

5. Elektrokleingerät nach einem der vorhergehenden Ansprüche,
**dadurch gekennzeichnet,**
**dass** es ein elektrischer Rasierapparat, eine elektrische Haarschneidemaschine oder eine elektrische Zahnbürste ist.

## Claims

1. Battery-operated small electrical device having
∘ an oscillating electric motor or linear motor that is operated in a resonance range,
∘ an electric circuit for controlling the oscillating electric motor or linear motor in the resonance range, the circuit being called the control circuit, and
∘ a control circuit for ascertaining and indicating battery charge level
**characterized in that**
upon battery charge reaching or falling below a specific level during operation, the control circuit is adapted to control the oscillating electric motor or linear motor such that it deviates from the rule according to which the oscillating electric motor or linear motor must always be operated at its resonant frequency and instead control the oscillating electric motor or linear motor at a frequency other than the resonant frequency in order to alter the motor noise of the oscillating electric motor or linear motor.

2. The small electrical device according to claim 1,
**characterized in that**
upon battery charge reaching or falling below a specific level during operation, the control circuit is intended to control the oscillating electric motor or linear motor with a control signal, the frequency of which decreases.

3. The small electrical device according to claim 2,
**characterized in that**
upon battery charge reaching or falling below a specific level during operation, the control circuit is intended to control the oscillating electric motor or linear motor with a control signal, the duty factor of which decreases.

4. The small electrical device according to any of the preceding claims,
**characterized in that**
the specific battery charge level at which the control circuit changes the motor size is selected such that the battery still has sufficient charge stored to continue operating the small electrical device until the control circuit has changed the control signal so much that the oscillating electric motor or linear motor finally comes to a stop.

5. The small electrical device according to any of the preceding claims,
**characterized in that**
it is an electric shaver, an electric hair-cutting device or an electric toothbrush.

## Revendications

1. Petit appareil électrique alimenté par batterie comprenant
∘ un moteur linéaire ou moteur électrique oscillant, entraîné en fonctionnement dans une plage de résonance,
∘ un interrupteur électronique pour l'excitation du moteur linéaire ou du moteur électrique oscillant dans la plage de résonance, qui est désigné comme circuit de commande et
∘ un circuit de commande pour la détermination et l'affichage de l'état de recharge de la batterie
**caractérisé en ce que,**
lorsque l'état de recharge déterminé de la batterie est atteint ou que l'on tombe en-dessous en fonctionnement, le circuit de commande est conçu de manière à exciter le moteur linéaire ou moteur électrique oscillant, de sorte que l'on dévie de la règle générale, selon laquelle le moteur linéaire ou moteur électrique oscillant doit toujours être entraîné avec sa fréquence de résonance et, qu'à la place, le moteur linéaire ou moteur électrique oscillant est entraîné avec une autre fréquence que la fréquence de résonance, afin de modifier le bruit de moteur du moteur linéaire ou moteur électrique oscillant.

2. Petit appareil électrique selon la revendication 1,
**caractérisé en ce que,**
lorsque l'état de recharge déterminé de la batterie est atteint ou que l'on tombe en-dessous pendant le fonctionnement, le circuit de commande est prévu pour exciter le moteur linéaire ou moteur électrique oscillant avec un signal de commande dont la fréquence diminue.

3. Petit appareil électrique selon la revendication 2,
**caractérisé en ce que,**
lorsque l'état de recharge déterminé de la batterie est atteint ou que l'on tombe en-dessous pendant le fonctionnement, le circuit de commande est prévu pour exciter le moteur linéaire ou moteur électrique oscillant avec un signal de commande dont le rapport cyclique diminue.

4. Petit appareil électrique selon l'une quelconque des revendications précédentes,
**caractérisé en ce que,**
l'état de recharge déterminé de la batterie, à partir duquel le circuit de commande modifie le bruit du moteur, est choisi de telle sorte que la batterie ait encore une charge suffisante pour entraîner le petit appareil électrique jusqu'à ce que le circuit de commande ait modifié le signal de commande dans une telle mesure que le moteur linéaire ou moteur électrique oscillant s'immobilise enfin.

5. Petit appareil électrique selon l'une quelconque des revendications précédentes,
**caractérisé en ce que,**
l'appareil est un rasoir électrique, une tondeuse pour cheveux électrique ou une brosse à dents électrique.
